# EUROPEAN PATENT APPLICATION

(11) **EP 4 615 051 A1**
(43) Date of publication of application: **10.09.2025**
(21) Application number: 22963958.8
(22) Date of filing: 03.11.2022
(51) Int. Cl.: H04W 36/00

(54) **WIRELESS COMMUNICATION METHOD, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: RGTH
(86) International application number: PCT/CN2022/129637
(87) International publication number: WO 2024/092648

(57) **Abstract**

Provided are a wireless communication method, and a terminal device and a network device. The method comprises: a terminal device receiving first information, wherein the first information is used for performing cell selection/cell reselection, and the first information is related to a low-power-consumption wake-up signal. That is to say, a terminal device may receive first information, which is related to a low-power-consumption wake-up signal and is used for selecting a resident cell during a cell selection or reselection process, which is conductive to an increase in the possibility of the terminal device selecting a cell for residence, which cell supports the low-power-consumption wake-up signal, such that the power consumption of the terminal device is reduced.

## Description

### TECHNICAL FIELD

This application relates to the field of communications technologies, and more specifically, to a wireless communication method, a terminal device, and a network device.

### BACKGROUND

To reduce power consumption of a terminal device, a wake-up receiver (wake-up receiver, WUR) is introduced to receive a low-power wake-up signal. In this way, the terminal device may disable a primary receiver. However, after cell selection or cell reselection is performed according to an existing cell selection or cell reselection policy, a cell on which the terminal device camps may not support the low-power wake-up signal. In this case, in the cell on which the terminal device camps, the terminal device cannot use the WUR or disable the primary receiver. As a result, power consumption of the terminal device is still relatively large.

### SUMMARY

This application provides a wireless communication method, a terminal device, and a network device. The following describes the aspects related to this application.

According to a first aspect, a wireless communication method is provided, and the method includes: receiving, by a terminal device, first information, where the first information is used for cell selection/cell reselection, and the first information is related to a low-power wake-up signal.

According to a second aspect, a wireless communication method is provided, and the method includes: transmitting, by a network device, first information, where the first information is used for cell selection/cell reselection, and the first information is related to a low-power wake-up signal.

According to a third aspect, a terminal device is provided, and the terminal device includes: a receiving unit, configured to receive first information, where the first information is used for cell selection/cell reselection, and the first information is related to a low-power wake-up signal.

According to a fourth aspect, a network device is provided, and the network device includes: a transmitting unit, configured to transmit first information, where the first information is used for cell selection/cell reselection, and the first information is related to a low-power wake-up signal.

According to a fifth aspect, a terminal device is provided, and the terminal device includes a processor, a memory, and a communications interface. The memory is configured to store one or more computer programs, and the processor is configured to invoke the computer program in the memory to cause the terminal device to execute some or all of the steps in the method according to the first aspect.

According to a sixth aspect, a network device is provided, and the network device includes a processor, a memory, and a transceiver. The memory is configured to store one or more computer programs, and the processor is configured to invoke the computer program in the memory to cause the network device to execute some or all of the steps in the method according to the second aspect.

According to a seventh aspect, an embodiment of this application provides a communications system, where the system includes the terminal device and/or the network device described above. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program, and the computer program causes a communications device (for example, a terminal device or a network device) to execute some or all of the steps in the method according to the foregoing aspects.

According to a ninth aspect, an embodiment of this application provides a computer program product. The computer program product includes a non-transitory computer-readable storage medium that stores a computer program. The computer program is operable to cause a communications device (for example, a terminal device or a network device) to execute some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

In embodiments of this application, a terminal device may receive first information related to a low-power wake-up signal, and the first information is used to select a camping cell in a cell selection or cell reselection process, which facilitates increasing a probability that a cell supporting the low-power wake-up signal is selected by the terminal device for camping, so as to reduce power consumption of the terminal device. By contrast, in a conventional cell selection or cell reselection process, the terminal device cannot acquire information related to a low-power wake-up signal, and thus a cell selected by the terminal device for camping generally does not support the low-power wake-up signal, and thus power consumption of the terminal device cannot be effectively reduced.

### BRIEF DESCRIPTION OF DRAWINGS

FIG. 1 shows a wireless communications system 100 to which embodiments of this application are applied.
FIG. 2 is a schematic diagram of a terminal device having a WUR.
FIG. 3 is a flowchart of a wireless communication method according to an embodiment of this application.
FIG. 4 is a schematic diagram of a terminal device according to an embodiment of this application.
FIG. 5 is a schematic diagram of a network device according to an embodiment of this application.
FIG. 6 is a schematic structural diagram of a communications apparatus according to an embodiment of this application.

### DESCRIPTION OF EMBODIMENTS

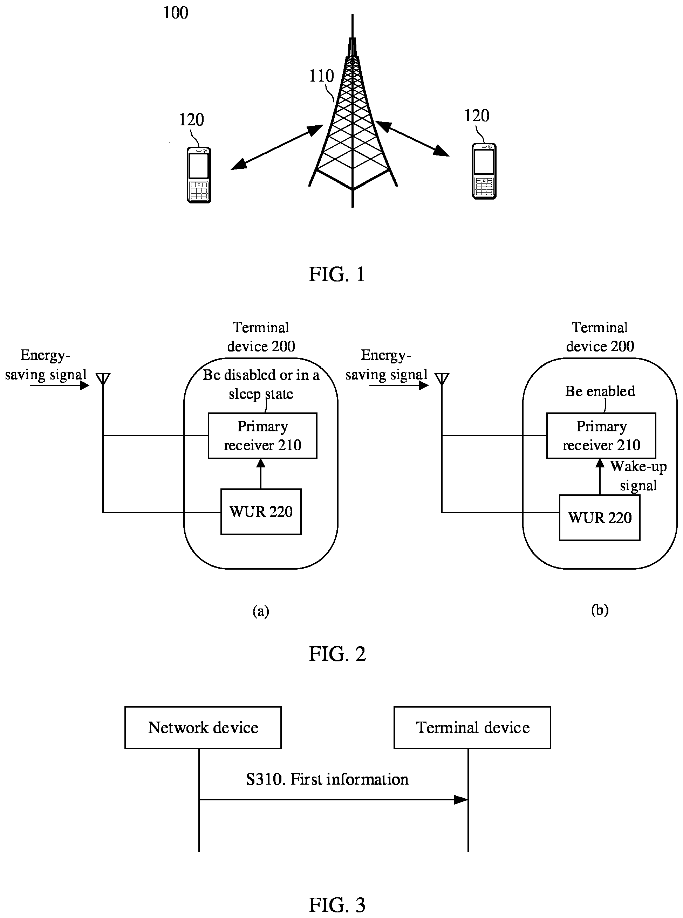

Technical solutions in this application are described below with reference to the accompanying drawings. For a better understanding of this application, a communications system to which embodiments of this application are applied is first described below with reference to FIG. 1.

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 exemplarily shows one network device and two terminals. Optionally, the wireless communications system 100 may include a plurality of network devices, and another quantity of terminal devices may be included in coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a user unit, a user station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks with a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

It should be understood that all or some of functions of the communications device in this application may alternatively be implemented by software functions running on hardware, or by virtualization functions instantiated on a platform (for example, a cloud platform).

For ease of understanding, communication processes involved in embodiments of this application are described below.

### Radio resource control (radio resource control, RRC) state and mobility management

Currently, the protocol defines three RRC states of a terminal device: an RRC connected (RRC_connected) state, an RRC idle (RRC-idle) state, and an RRC inactive (RRC-inactive) state.

The RRC connected state may be a state of the terminal device presented after a random access procedure is completed but an RRC release is not performed. An RRC connection exists between the terminal device and a network device (for example, an access network device). In the RRC connected state, data transmission, such as downlink data transmission and/or uplink data transmission, may be performed between the terminal device and the network device. Alternatively, transmission of a data channel and/or control channel specific to the terminal device may be performed between the terminal device and the network device, to transmit specific information or unicast information of the terminal device.

In the RRC connected state, the network device may determine cell-specific location information of the terminal device; that is, the network device may determine a cell to which the terminal device belongs. In the RRC connected state, after the terminal device moves, for example, from one cell to another, the network device may control the terminal device to perform cell handover (handover). It may be learned that mobility management of the terminal device in the RRC connected state may include cell handover. In addition, the mobility management of the terminal device in the RRC connected state may be controlled by the network device. Accordingly, the terminal device may be handed over to a designated cell according to an instruction issued by the network device.

The RRC idle state is a state of the terminal device presented when the terminal device camps on a cell but does not perform random access. The terminal device usually enters the RRC idle state after being powered on or after an RRC release. In the RRC idle state, there is no RRC connection between the terminal device and the network device (for example, a network device camped on by the terminal device), a context of the terminal device is not stored in the network device, and no connection is established for the terminal device between the network device and a core network. If the terminal device is required to enter the RRC connected state from the RRC idle state, an RRC connection establishment process is initiated.

In the RRC idle state, the core network (core network, CN) may transmit a paging message to the terminal device; that is, a paging process may be triggered by the CN. Optionally, a paging area may also be configured by the CN. In some cases, for a terminal device in an RRC idle state, after the terminal device moves (for example, from one cell to another), the terminal device may initiate a cell reselection (cell reselection) process. In some other cases, for a terminal device in an RRC idle state, when the terminal device is required to access a cell, the terminal device may initiate a cell selection (cell selection) process. In other words, mobility management of the terminal device in the RRC idle state may include cell reselection and/or cell selection.

The RRC inactive state is a state defined in order to reduce air interface signalling, quickly restore wireless connections, and quickly restore data services. The RRC inactive state is a state between the connected state and the idle state. The terminal device has previously entered the RRC connected state and then released the RRC connection with the network device, but the network device has stored the context of the terminal device. In addition, the connection established for the terminal device between the network device and the core network has not been released. In other words, a user plane bearer and a control plane bearer between the RAN and the CN are still maintained; that is, there is a CN-NR connection.

In the RRC inactive state, the RAN may transmit a paging message to the terminal device; that is, a paging process may be triggered by the RAN. An RAN-based paging area is managed by the RAN, and a location of the terminal device that can be learned by the network device is at the level of the RAN-based paging area.

In some cases, for a terminal device in an RRC inactive state, after the terminal device moves (for example, from one cell to another), the terminal device may initiate a cell reselection procedure. In some other cases, for a terminal device in an RRC inactive state, when the terminal device is required to access a cell, the terminal device may initiate a cell selection procedure. In other words, mobility management of the terminal device in the RRC inactive state may include cell reselection and/or cell selection.

Any one of cell selection, cell handover, or cell reselection may be performed based on an RRM measurement result of RRM measurement. For example, when the RRM measurement result is greater than an RRM measurement threshold, the terminal device may perform cell selection, cell handover, or cell reselection. The following describes processes of cell selection and cell reselection.

### Cell selection

Cell selection generally occurs after PLMN selection, so that a terminal device may select a cell (also referred to as "a target cell") that meets a signal quality condition as soon as possible in a selected PLMN. In embodiments of this application, an object for cell selection may be referred to as a "candidate cell". Currently, cell selection may include initial cell selection and stored information cell selection.

For the initial cell selection, generally there is no prior information that may help the terminal device identify a specific system frequency. Therefore, the terminal device is required to locate a proper cell for camping by sweeping all frequency bands according to its own capability. In each frequency, the terminal device is only required to search for a cell with best signal quality. Once a proper cell is found, the terminal device may select the cell for camping.

For the stored information cell selection, the terminal device has stored information about a carrier frequency in a previous access process and some cell parameter information, for example, information obtained from previously received measurement control information or a previously camping/detected cell. The terminal device preferentially selects cells with related information for measurement. Once a proper cell appears, the terminal device may select the cell for camping. If all the cells with the related information stored are not proper, the terminal device may further initiate an initial cell selection process.

During cell selection, the terminal device is required to measure a candidate cell to evaluate signal quality and determine whether the candidate cell meets a camping standard. In some implementations, a measurement standard for cell selection may be referred to as an S criterion. When signal quality of a candidate cell meets the S criterion, the candidate cell may be selected as a camping cell.

### Cell reselection

As described above, when a terminal device is in an idle state or an inactive state, the terminal device may continuously perform cell reselection, so as to camp on a cell with a higher priority or better signal quality (also referred to as a "target cell"). In some implementations, a network device may control, by setting priorities of different frequencies, a frequency on which the terminal device camps. Correspondingly, after selecting a proper frequency based on a priority corresponding to the frequency, the terminal device may select a cell with better signal quality on the frequency, to provide a better service.

In embodiments of this application, an object for cell reselection may be referred to as a "candidate cell". In some implementations, the candidate cell may include cells in a neighboring cell list. In some other implementations, the candidate cell may include a cell detected in a reselection process. Certainly, in embodiments of this application, the candidate cell may include an intra-frequency cell, an inter-frequency cell, a cell on a frequency of different RATs, and the like.

Generally, cell reselection may include intra-frequency cell reselection and inter-frequency cell reselection. The intra-frequency cell reselection may be used for solving a wireless coverage problem, while the inter-frequency cell reselection may be used for solving a wireless coverage problem and also for load balancing. The following describes the intra-frequency cell reselection and the inter-frequency cell reselection.

The intra-frequency cell reselection may include the following three steps.

In step 1, it is determined, by comparing a parameter of a serving cell with a parameter in system broadcast, whether to enable intra-frequency measurement.

In some implementations, the parameter of a serving cell may include a cell selection Receive level *Sᵣₓₗₑᵥ* and a cell selection quality value *S_{qual}.* For a manner of determining Sᵣₓₗₑᵥ and S_{qual}, reference may be made to the S criterion.

In some implementations, the parameter in system broadcast includes *S_{intrasearchP}* and *S_{intrasearchQ}.*

If *Sᵣₓₗₑᵥ > S_{intrasearchP}* and *S_{qual}* > *S_{intrasearchQ},* the terminal device may choose not to perform intra-frequency measurement; otherwise, the terminal device is required to perform intra-frequency measurement.

In step 2: R criterion ranking is performed on candidate cells depending on quality to select an optimal cell.

In some implementations, the R criterion may be represented as: *Rₛ* = *Q_{meas,s}* + *Q_{hyst} - Qoffsetₜₑₘₚ;* and *Rₙ* = *Q_{meas,n} - Qoffset - Qoffsetₜₑₘₚ,* where *Rₛ* denotes an R value of a serving cell; *Rₙ* denotes an R value of a neighboring cell; *Q_{hyst}* denotes a lag value of the ranking criterion; *Qₘₑₐₛ* denotes an RSRP value used for cell reselection; *Qoffset* denotes an offset value; and *Qoffsetₜₑₘₚ* denotes a temporary offset value.

It should be noted that, for the intra-frequency reselection, when there is a valid inter-cell *Qoffset, n* in system broadcast, *Qoffset* is equal to the inter-cell *Qoffset, n.* When there is no valid inter-cell *Qoffset, n* in system broadcast, *Qoffset* is equal to 0. For the inter-frequency reselection, when there is a valid inter-cell *Qoffset, n* in system broadcast, *Qoffset* is equal to a sum of inter-frequency *Qoffsetfrequency* and the inter-cell *Qoffset, n.* When there is no valid inter-cell *Qoffset, n* in system broadcast, *Qoffset* is equal to the inter-frequency *Qoffsetfrequency.*

In addition, in the R criterion, the "subscript s" denotes a parameter corresponding to a serving cell, and the "subscript n" indicates a parameter corresponding to a neighboring cell.

In some scenarios, a communications system (for example, an NR system) may support multi-beam operation. In a case of cell reselection in a multi-beam operation, to determine an optimal cell, a network device may configure an equivalent range (represented by "rangToBestCell") by using system information. Accordingly, if the parameter is not configured by the network device, a cell with highest R ranking may be reselected by the terminal device; otherwise, a cell whose R belongs to a range of [*R_{best}* - rangToBestCell, *R_{best}*] and having largest number of beams of qualities above a threshold (represented by *"absThreshSS-Consolidation"*) may be reselected by the terminal device, where *R_{best}* denotes a cell with a highest R value among cells measured. If a plurality of cells meet the condition, a cell with highest ranking is reselected by the terminal device. The reselected cell is considered to be the cell with highest ranking.

In a scenario in which a multi-beam operation is supported, the terminal device is required to measure a beam. For example, the terminal device may measure a corresponding beam by measuring a synchronization signal and physical broadcast channel block (synchronization signal and physical broadcast channel block, SSB) SSB or a channel state information reference signal (channel state information-reference signal, CSI-RS). A measurement process is an energy consumption process for the terminal device. To reduce power consumption of the terminal device, a SSB-based measurement timing configuration is introduced, which is also referred to as a measurement timing configuration (measurement timing configuration, SMTC). SMTC defines duration and a cycle for measurement of a specific resource by the terminal device. In other words, during an SMTC, the terminal device may perform radio resource management measurement on a configured SSB or CSI-RS.

It should be noted that the SMTC may be configured in a granularity of frequency band. The SMTC may be applied to a scenario of intra-frequency cell reselection and/or inter-frequency cell reselection.

In some implementations, the following constraints may be met in a cell ranking and reselection process.

Constraint 1: Signal quality corresponding to a selected cell (for example, a new cell) is better than a current cell in ranking and the case lasts for a period of time. For example, the period of time is greater than *T_{reseleectionNR}.*

Constraint 2: If the terminal device is in a non-normal moving state, parameters *T_{reseleectionNR}* and *Q_{hyst}* may need to be scaled.

Constraint 3: The terminal device camps on a source cell for more than 1 second.

In step 3, it is determined, based on a proper cell criterion, whether the optimal cell is a proper cell.

During inter-frequency cell reselection, the network device may implement load balancing of different frequencies by setting a proper priority parameter. The inter-frequency cell reselection includes the following three operations.

### Operation 1: Measurement

For other frequencies whose priorities are higher than a current frequency according to indication of system information, the terminal device is required to measure the frequencies. For other frequencies whose priority is equal to or lower than the current frequency according to indication of system information, the terminal device performs measurement according to the following criteria.

If *Sᵣₓₗₑᵥ > S_{intraSearchP}* and *S_{qual}* > *S_{intraSearchQ}* for a serving cell, the terminal device may choose not to perform intra-frequency measurement; otherwise, the terminal device is required to start intra-frequency measurement.

If *Sᵣₓₗₑᵥ* > *S_{nonintraSearchP}* and *S_{qual} > S_{nonintraSearchQ}* for a serving cell, the terminal device may choose not to perform inter-frequency measurement or inter-RAT measurement; otherwise, the terminal device is required to start inter-frequency measurement or inter-RAT measurement.

### Operation 2: Priority processing

The terminal device may acquire priority information (for example, a common priority) of a frequency from a broadcast message (for example, system information) of the network device, or acquire priority information (for example, a dedicated priority) of a frequency by using dedicated signaling (for example, an RRC release message), or inherit priority information of a frequency from another RAT when performing inter-RAT cell (re)selection.

In some implementations, if a dedicated priority is provided, the terminal device may ignore all common priorities. If priority information of a current camping cell of the terminal device is not provided in the system information, the terminal device may set the priority of a frequency at which the cell is located to a lowest priority.

In some implementations, the terminal device may perform cell reselection (selecting a frequency with a higher priority as much as possible) according to a priority policy only between frequencies that are included and provided with priorities in the system information.

### Operation 3: Cell reselection criteria

The cell reselection criteria may include the following three types according to a frequency priority: cell reselection of a high-priority frequency, cell reselection of an equal-priority frequency, and cell reselection of a low-priority frequency, which are described below.

### Case 1: Cell reselection of a high-priority frequency

The terminal device has camped on a current cell for more than 1 second, and a cell to be reselected has a high-priority frequency and has a signal quality being higher than a threshold for more than a specified time length. In this case, the terminal device may perform cell reselection.

### Case 2: Cell reselection of an equal-priority frequency

For the cell reselection of an equal-priority frequency, the terminal device may perform R ranking on cells on frequencies having a same priority as the current cell according to the R criterion, and then select a proper cell to camp on. For details, reference may be made to the foregoing description.

### Case 3: Cell reselection of a low-priority frequency

In some implementations, when the terminal device has been camped on a current cell for more than 1 second, and in a case that no cell on a high-priority frequency or an equal-priority frequency meets a requirement and signal quality of the current cell is lower than a threshold, if signal quality of a cell on a low-priority frequency has been higher than a threshold for a specific time, the terminal device may perform cell reselection.

It should be noted that, in the foregoing cell reselection process, a manner of calculating cell signal quality is not limited in embodiments of this application. In some implementations, if a parameter N and a threshold are broadcast in the system information, cell signal quality may be determined based on signal qualities corresponding to N optimal beams that meet the threshold, for example, may be a linear average value of the signal qualities corresponding to the N optimal beams. In some other implementations, if the parameter N and the threshold are not broadcast in the system information, the cell signal quality may be best signal quality corresponding to a beam in a cell, where N is a positive integer.

### Wake-up receiver (wake-up receiver, WUR)

To meet an energy saving requirement of a terminal device, a WUR (also referred to as an ultra-low power WUR "ultra-low power WUR, LP-WUR") is planned to be introduced in the R18 standard to receive an energy-saving signal (also referred to as "wake-up signal (wake-up signal, WUS)", "ultra-low power wake-up signal (ultra-low power WUS, LP-WUS)", low-power wake-up signal, or the like). The WUR features ultra-low cost, ultra-low complexity, and ultra-low power consumption, and it mainly receives an energy-saving signal based on envelope detection. Therefore, a modulation mode, a waveform, and the like of the energy-saving signal received by the WUR are different from those of a signal carried by a PDCCH defined in the existing R16 and R17 standards. The energy-saving signal is mainly an envelope signal obtained by performing ASK modulation on a carrier signal. In some implementations, demodulation of the envelope signal may be accomplished by driving a low-power circuit based on energy provided by a wireless radio frequency signal, and the terminal device is not required to supply power. Therefore, the WUR may be passive. In some other implementations, the WUR may also be powered by the terminal device. Regardless of the power supply method, the WUR greatly reduces power consumption compared with a conventional receiver in the terminal device. For example, the WUR may achieve power consumption of less than 1 milliwatt (mw), which is far lower than tens to hundreds of mw power consumption of the conventional receiver.

Currently, the WUR may be combined with the terminal device as an additional module of a receiver of the terminal device. Certainly, the WUR may alternatively be used as a separate module of the terminal device, for example, to implement a wake-up function.

FIG. 2 is a schematic diagram of a terminal device having a WUR. Referring to FIG. 2, a terminal device 200 may include a primary receiver 210 and a WUR 220. In order to save power of the terminal device 200, the terminal device 200 may be configured to be in a sleep state (for example, when the terminal device is in a DRX sleep period). In other words, the primary receiver 210 of the terminal device may be in a sleep state (refer to FIG. 2(a)). In this case, the terminal device 200 may use the WUR 220 to receive an energy-saving signal. In some cases, if the terminal device 200 is required to wake up the primary receiver 210, a network device may transmit a wake-up signal, and accordingly, the terminal device may monitor the WUS through the WUR 220. When the WUR 220 detects the WUS, the primary receiver 210 may be waken up (refer to FIG. 2(b)). Otherwise, the primary receiver 210 of the terminal device may be in the sleep state.

In some implementations, the WUR detecting the WUS may include: the WUR detecting one WUS, or the WUR detecting a plurality of WUSs.

In some other implementations, the WUR waking up the primary receiver may include: the WUR transmitting the WUS to the primary receiver, where the WUS is used to wake up the primary receiver, or the WUR transmitting wake-up indication information to the primary receiver, where the wake-up indication information is used to wake up the primary receiver.

To facilitate distinction, the difference between the WUR and the primary receiver is described below in terms of a modulation mode, a modulation waveform, a transmission rate, a supported bandwidth range, a code rate, or the like.

With respect to modulation schemes supported by the two, the complexity of a modulation scheme supported by the WUR is lower than that of a modulation scheme supported by the primary receiver. In some implementations, the modulation scheme supported by the WUR may include one or more of the following modulation schemes: amplitude shift keying (amplitude shift keying, ASK), phase shift keying (phase shift keying, PSK), frequency shift keying (frequency shift keying, FSK), or the like. Correspondingly, the modulation mode supported by the primary receiver may include one or more of the following modulation schemes: quadrature phase shift keying (quadrature phase shift keying, QPSK), quadrature amplitude modulation (quadrature amplitude modulation, QAM), orthogonal frequency division multiplexing (orthogonal frequency division multiplexing, OFDM), or the like. Certainly, in some other implementations, the primary receiver may also support at least one modulation mode of ASK, PSK, FSK, or the like. This is not specifically limited in embodiments of this application.

With respect to modulation waveforms supported by the two, the complexity of a modulation waveform supported by the WUR is lower than that of a modulation waveform supported by the primary receiver; in other words, the modulation waveform supported by the WUR is simpler than that supported by the primary receiver. For example, the modulation waveform supported by the WUR may include one or more of the following modulation waveforms: a waveform corresponding to an ASK signal, a waveform corresponding to a PSK signal, or a waveform corresponding to an FSK signal. Correspondingly, the modulation waveform supported by the primary receiver may include one or more of the following modulation waveforms: a waveform corresponding to a QPSK signal, a waveform corresponding to a QAM signal, or a waveform corresponding to an OFDM signal. Certainly, in some embodiments, the modulation waveform supported by the primary receiver may also include a waveform corresponding to one or more signals of ASK, PSK, or FSK.

With respect to transmission rates supported by the two, a transmission rate supported by the WUR is lower than that supported by the primary receiver. For example, the transmission rate supported by the WUR is less than a first rate threshold, and a value of the first rate threshold may be in the range of 1 Kbps to 1 Mbps, where the value of the first rate threshold may be 1 Kbps, 128 Kbps, 515 Kbps, 1 Mbps, or the like. Correspondingly, the transmission rate supported by the primary receiver may be greater than the first rate threshold. For example, the transmission rate supported by the primary receiver may be greater than 10 Kbps, 100 Kbps, 1000 Kbps, 1 Gbps, or the like.

With respect to bandwidth ranges supported by the two, a bandwidth range supported by the WUR is less than that supported by the primary receiver; in other words, a bandwidth supported by the WUR is narrower than that supported by the primary receiver. For example, the bandwidth supported by the WUR may be less than or equal to a first bandwidth threshold, and a value of the first bandwidth threshold may be in the range of 1 KB to 1 MB, where the value of the first bandwidth threshold may be 1 KB, 128 KB, 515 KB, 1 MB, or the like. Correspondingly, the bandwidth supported by the primary receiver may be greater than the first bandwidth threshold. For example, the bandwidth supported by the primary receiver may be greater than 10 KB, 100 KB, 1000 KB, 1 GB, or the like.

With respect to code rates supported by the two, a code rate supported by the WUR is lower than that supported by the primary receiver. For example, the code rate supported by the WUR is less than or equal to a first code rate threshold, and the first code rate threshold may range from 0.3 to 0.6. For example, the first code rate threshold may be 0.3, 0.5, or 0.6. Correspondingly, the code rate supported by the primary receiver may be greater than the first code rate threshold. For example, the code rate supported by the primary receiver may be greater than 0.7, 0.8, or 0.9, or may be close to 1.

It may be learned from the foregoing description that, to reduce power consumption of a terminal device, a WUR is introduced to receive an LP-WUS. In this way, the terminal device may disable a primary receiver. However, after cell selection or cell reselection is performed according to an existing cell selection or cell reselection policy, a cell on which the terminal device camps may not support the LP-WUS. In this case, the terminal device cannot use the WUR or disable the primary receiver in the cell on which the terminal device camps. As a result, power consumption of the terminal device is still relatively large.

Therefore, an embodiment of this application provides a wireless communication method. In this method, a terminal device may receive first information associated with an LP-WUS, and the first information is used to select a camping cell in a cell selection or cell reselection process, which facilitates increasing a probability that a cell supporting the LP-WUS is selected by the terminal device for camping, so as to reduce power consumption of the terminal device. With reference to FIG. 3, the following describes a wireless communication method according to an embodiment of this application.

FIG. 3 is a flowchart of a wireless communication method according to an embodiment of this application. The method shown in FIG. 3 includes step S310.

In step S310, a network device transmits first information to a terminal device.

In some implementations, the first information is used for cell reselection or cell selection. In other words, the terminal device may perform cell selection or cell reselection based on the first information.

In some implementations, the first information may be associated with an LP-WUS; in other words, the first information may be related to an LP-WUS. For example, the first information may be used to indicate whether the LP-WUS is supported, and whether the LP-WUS being supported may include, for example, whether transmission of the LP-WUS being supported. In other words, the first information may be associated with an LP-WUS function. For example, the first information may be used to indicate whether the LP-WUS function is supported, and whether the LP-WUS function being supported may include, for example, whether transmission of the LP-WUS function being supported.

In some implementations, the first information may be carried in system information, for example, the first information may be carried in a SIB1. For another example, the first information may be carried in a SIB3, and for another example, the first information may be carried in a SIB4. Certainly, in embodiments of this application, the first information may alternatively be dedicated information. This is not limited in embodiments of this application.

In some implementations, the terminal device may be a terminal device supporting the LP-WUS, for example, may be the terminal device shown in FIG. 2. Certainly, in embodiments of this application, the terminal device may alternatively be a terminal device that does not support the LP-WUS, which is not limited in embodiments of this application.

As described above, for a terminal device in an idle state or an inactive state, a proper cell may be selected through cell selection and/or cell reselection for camping. Therefore, in embodiments of this application, the terminal device may be in an idle state or an inactive state.

In embodiments of this application, an object targeted by the first information is not limited. In some implementations, the first information may include cell-specific information; in other words, the first information may include cell-level information; in other words, the first information may include information corresponding to a cell (for example, a first cell). The cell may include an intra-frequency cell and/or an inter-frequency cell. The intra-frequency cell may be understood as an intra-frequency cell of a serving cell. The inter-frequency cell may be understood as an inter-frequency cell of the serving cell.

In some other implementations, the first information may include frequency-specific information; in other words, the first information may include frequency-level information; in other words, the first information may include information corresponding to a frequency (for example, a first frequency), where the frequency may be intra-frequency and/or inter-frequency. The intra-frequency may be understood as being intra-frequency of a frequency where the serving cell is located. The inter-frequency may be understood as being inter-frequency of a frequency where the serving cell is located.

The following uses an example in which the first information includes the cell-level information or frequency-level information.

### The first information including cell-level information

In some implementations, information corresponding to a first cell may be used to indicate whether the first cell supports an LP-WUS, or information corresponding to a first cell may be used to indicate whether the first cell supports an LP-WUS function.

In embodiments of this application, the information corresponding to the first cell is introduced in a cell selection or cell reselection process, which facilitates that a cell supporting the LP-WUS is selected as a target cell by a terminal device based on the information corresponding to the first cell. In this way, the terminal device may receive a paging signal by using a low-power receiver in the target cell, so as to reduce power consumption of the terminal device.

In some implementations, the information corresponding to the first cell may be presented in a form of a list. In some implementations, if the first cell is a cell that supports the LP-WUS, the first cell may be included in the list. In other words, a cell included in the list supports the LP-WUS. Therefore, the list may also be referred to as a "white list (white list)". As described above, the first cell may be an intra-frequency cell; in other words, any cell in the list is an intra-frequency cell. Correspondingly, the white list may also be referred to as an "intra-frequency cell white list", and may be represented by "intraFreqWhiteCellListLP-WUS". Certainly, the first cell may alternatively be an inter-frequency cell; in other words, any cell in the list is an inter-frequency cell. Correspondingly, the white list may also be referred to as an "inter-frequency cell white list", and may be represented by "inerFreqWhiteCellListLP-WUS".

In some other implementations, if the first cell is a cell that does not support the LP-WUS, the first cell may be included in a list, that is, a cell in the list does not support the LP-WUS. Therefore, the list may also be referred to as a "black list (black list)". As described above, the first cell may be an intra-frequency cell; in other words, any cell in the list is an intra-frequency cell. Correspondingly, the black list may also be referred to as an "intra-frequency cell black list", and may be represented by "intraFreqBlackCellListLP-WUS". Certainly, the first cell may alternatively be an inter-frequency cell; in other words, any cell in the list is an inter-frequency cell. Correspondingly, the black list may also be referred to as a "inter-frequency cell black list", and may be represented by "inerFreqBlackCellListLP-WUS".

Generally, a SIB3 of system information may be used for intra-frequency cell reselection, and may include intra-frequency cell (for example, intra-frequency neighboring cell) information. Therefore, in embodiments of this application, information about a corresponding intra-frequency cell (for example, the intra-frequency cell white list and/or intra-frequency cell black list) may be carried in the SIB3.

The following uses the intra-frequency cell white list and the intra-frequency cell black list as an example to describe an implementation of the SIB3 in embodiments of this application. As can be seen from the code of the SIB3 shown below, a parameter that may be carried in the SIB3 includes one or more of the following: an intra-frequency neighboring cell list (represented by "intraFreqNeighCellList" and "intraFreqNeighCellList-v1610"); an intra-frequency black neighboring cell list (represented by "intraFreqBlackCellList"); late non-critical extension (represented by "lateNonCriticalExtension"); an intra-frequency white neighboring cell list (represented by "intraFreqWhiteCellList-r16"); an intra-frequency adjacent CAG cell list (represented by "intraFreqCAG-CellList-r16"); an intra-frequency cell black list (intraFreqBlackCellListLP-WUS); or an intra-frequency cell white list (intraFreqWhiteCellListLP-WUS). In other words, the intra-frequency cell black list (intraFreqBlackCellListLP-WUS) and the intra-frequency cell white list (intraFreqWhiteCellListLP-WUS) may be carried in the SIB3.

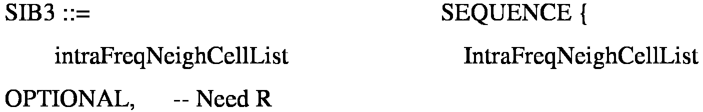

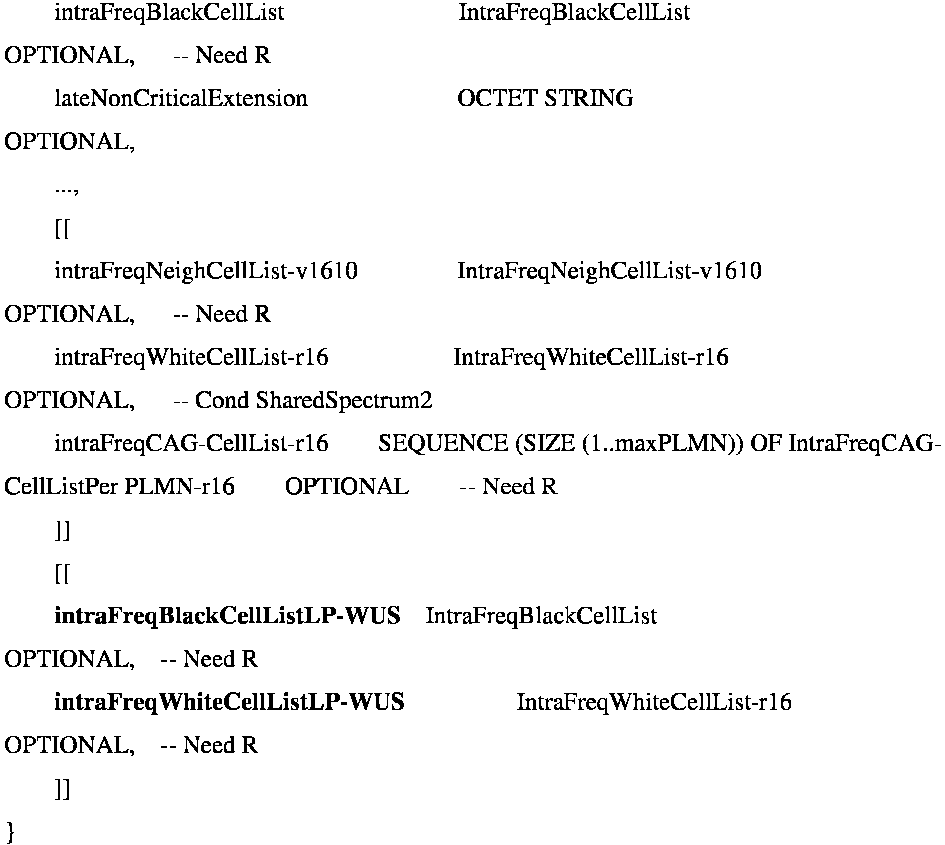

It should be noted that, there are many implementations of carrying information corresponding to a cell in the SIB3. For example, at least one of the white list or the black list is directly added to the SIB3. Certainly, since the SIB3 carries information about an intra-frequency cell, in embodiments of this application, the information corresponding to the cell may be directly added to the information about the intra-frequency cell already included in the SIB3, so as to indicate whether the cell supports an LP-WUS.

In addition, the SIB3 in embodiments of this application may alternatively carry a parameter other than the foregoing parameter, which is not limited in embodiments of this application.

Generally, a SIB4 of system information may be used for inter-frequency cell reselection, and may include inter-frequency cell (for example, inter-frequency neighboring cell) information. Therefore, in embodiments of this application, information corresponding to an inter-frequency cell (for example, the inter-frequency cell white list and/or the inter-frequency cell black list) may be carried in the SIB4.

The following uses the inter-frequency cell white list and the inter-frequency cell black list as an example to describe an implementation of the SIB4 in embodiments of this application. As can be seen from the code of the SIB4 shown below, a parameter that may be carried in the SIB4 includes one or more of the following: an inter-frequency carrier frequency list (represented by "interFreqCarrierFreqList" and "interFreqCarrierFreqList-v1610"); late non-critical extension (represented by "lateNonCriticalExtension"); inter-frequency carrier frequency information (represented by "InterFreqCarrierFreqInfo"); a cell reselection priority (represented by "cellReselectionPriority"); an SUL Cell reselection priority (represented by "cellReselectionSubPriority"); a cell reselection offset -Q (represented by "q-OffsetFreq"); an inter-frequency neighboring cell list (represented by "interFreqNeighCellList); an inter-frequency black neighboring cell list (represented by "interFreqBlackCellList"); an inter-frequency cell black list (represented by "interFreqBlackCellListLP-WUS"); or an inter-frequency cell white list (represented by "interFreqWhiteCellListLP-WUS").

The inter-frequency carrier frequency information may include one or more of the following: a downlink carrier frequency (represented by "dl-CarrierFreq"); a frequency band list (represented by "frequencyBandList"); a supplementary uplink (supplementary uplink, SUL) frequency band list (represented by "frequencyBandListSUL"); a number of SSBs (represented by "nrofSS-BlocksToAverage"); a threshold (represented by "absThreshSS-BlocksConsolidation"); an SMTC configuration (represented by "smtc"); an SSB subcarrier spacing (represented by "ssbSubcarrierSpacing"); SSB measurement (represented by "ssb-ToMeasure"); a parameter used to indicate an SSB index calculation mode (represented by "deriveSSB-IndexFromCell"); measurement of a received signal strength indicator (received signal strength Indicator, RSSI) of an SS (represented by "ss-RSSI-Measurement"); a cell minimum receive level (represented by "q-RxLevMin"); an SUL minimum cell receive level (represented by "q-RxLevMinSUL"); cell minimum receive quality (represented by "q-QualMin"); a maximum transmit power of a terminal (represented by "p-Max"); a cell reselection time delay (represented by "t-ReselectionNR"); a cell reselection speed factor (represented by "threshX-LowP"); a cell reselection-signal quality threshold (represented by "threshX-Q"); a low priority reselection threshold (represented by "t-ReselectionNR-SF"); or a cell reselection speed factor (represented by "t-ReselectionNR-SF").

In other words, in embodiments of this application, the inter-frequency cell black list (interFreqBlackCellListLP-WUS) and the inter-frequency cell white list (interFreqWhiteCellListLP-WUS) may be directly added to the SIB4.

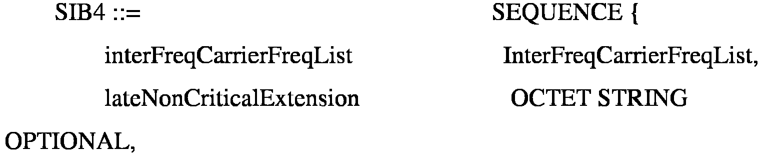

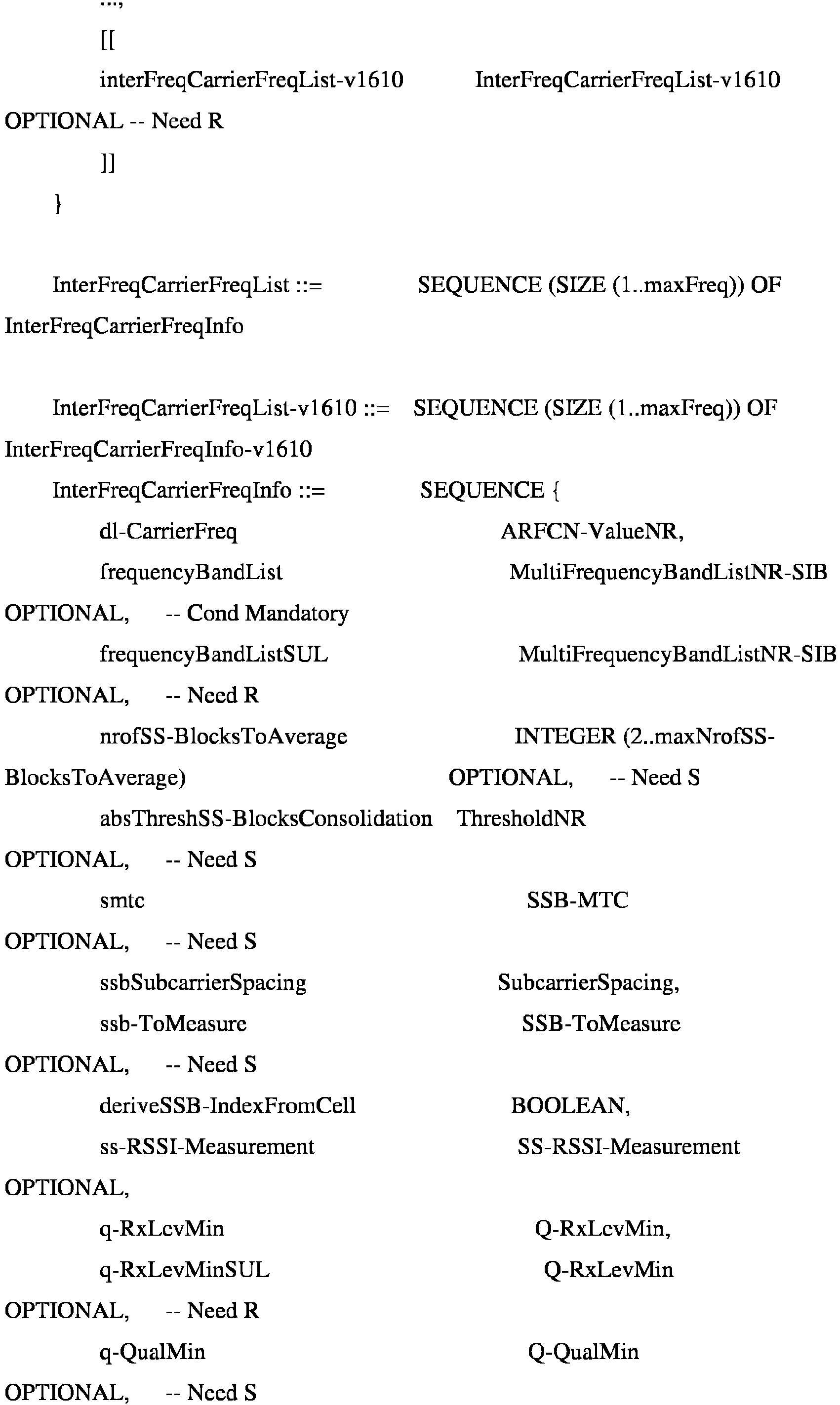

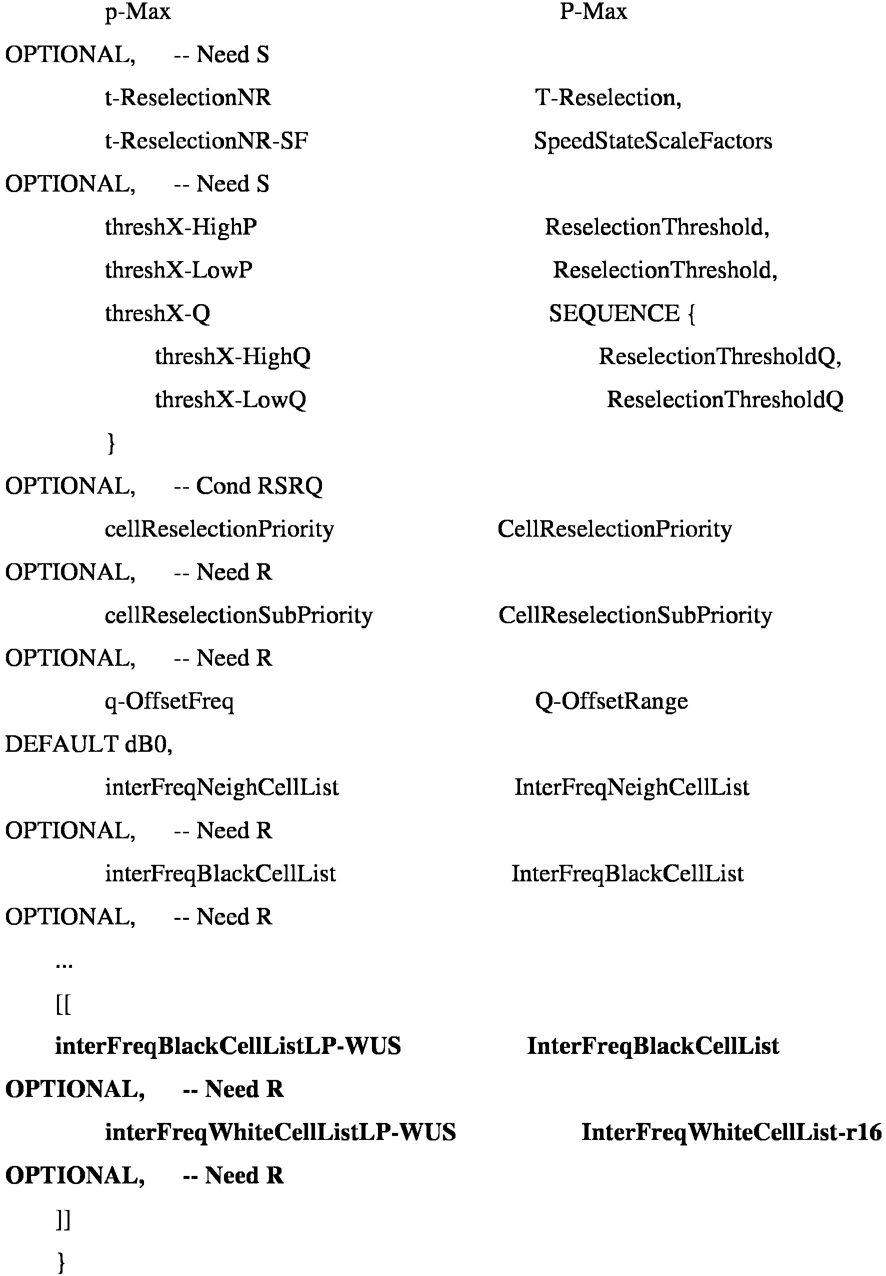

An embodiment of this application further provides an implementation of a SIB4. It should be noted that a parameter included in the SIB4 is similar to the parameter included in the SIB4 described above. For brevity, the following mainly describes a manner of carrying the inter-frequency cell black list and the inter-frequency cell white list.

As can be seen from the code of the SIB4 shown below, an inter-frequency carrier frequency list (represented by "interFreqCarrierFreqList-v17xy") is included in the SIB4. Correspondingly, the inter-frequency cell black list (interFreqBlackCellListLP-WUS) and the inter-frequency cell white list (interFreqWhiteCellListLP-WUS) may be carried in the inter-frequency carrier frequency list. In other words, in embodiments of this application, a parameter may be added in the SIB4 to carry the inter-frequency cell black list (interFreqBlackCellListLP-WUS) and the inter-frequency cell white list (interFreqWhiteCellListLP-WUS).

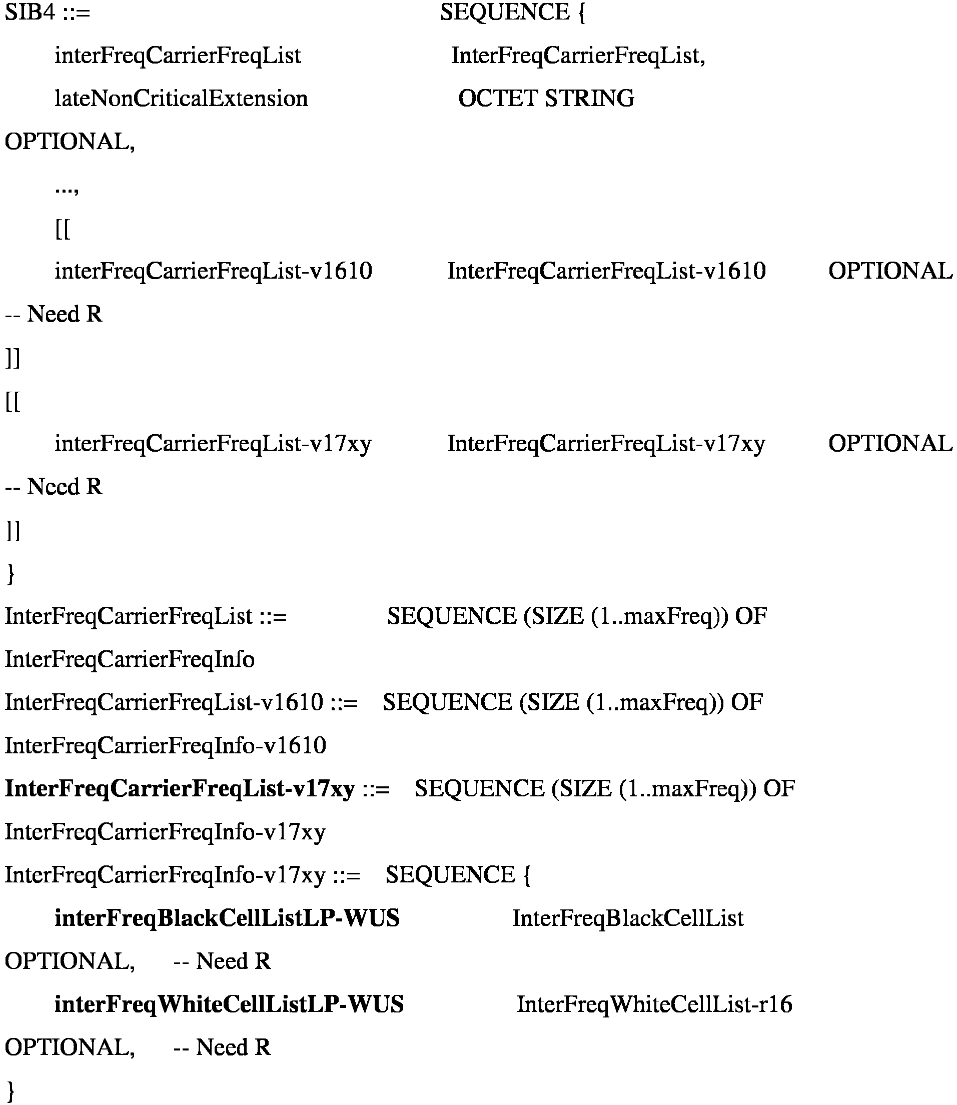

It should be noted that in embodiments of this application, the SIB4 may alternatively carry a parameter other than the foregoing parameter, which is not limited in embodiments of this application.

The foregoing describes the information corresponding to the first cell in embodiments of this application, and the following describes a manner of using the information corresponding to the first cell in embodiments of this application.

In some implementations, if the first cell does not support a low-power wake-up signal, the first cell does not belong to candidate cells for cell selection/cell reselection; in other words, the terminal device does not consider using the first cell as a candidate cell.

That the first cell does not belong to candidate cells may be understood as excluding the first cell in a process of cell reselection or cell selection; in other words, the terminal device does not measure the first cell. Certainly, in embodiments of this application, the terminal device may alternatively measure the first cell, but does not use the first cell as a candidate cell.

Certainly, in embodiments of this application, if the first cell does not support the low-power wake-up signal, the first cell may alternatively be a candidate cell. However, a priority of the first cell may be lower than that of another cell supporting the low-power wake-up signal in the candidate cells, so as to increase a probability that another cell supporting the low-power wake-up signal is selected by the terminal device.

In some other implementations, if the first cell supports the low-power wake-up signal, the first cell belongs to candidate cells in cell selection/cell reselection, and a priority of the first cell is higher than that of another cell not supporting the low-power wake-up signal in the candidate cells.

That the first cell belongs to the candidate cells may be understood as using the first cell as a candidate cell in a cell reselection or cell selection process; in other words, the terminal device measures the first cell.

In some implementations, in order to increase a probability that a cell supporting the LP-WUS is selected by the terminal device as a target cell after cell selection or cell reselection, the terminal device may preferentially select a cell supporting the LP-WUS as the target cell during cell selection or cell reselection.

For example, in the cell reselection process described above, the terminal device may rank candidate cells by using the R criterion. Accordingly, when the terminal device selects a target cell, a cell having a highest ranking (for example, a corresponding R is the largest) and supporting the LP-WUS may be used as the target cell.

For another example, in the cell reselection process described above, the terminal device may rank cells in a white list by using the R criterion. Accordingly, the terminal device selects a cell having a highest ranking (for example, a corresponding R is the largest) in the white list as the target cell.

### The first information including frequency-level information

In some implementations, information corresponding to a first frequency may be used to indicate whether the first frequency supports an LP-WUS, or information corresponding to a first frequency may be used to indicate whether the first frequency supports an LP-WUS function.

In embodiments of this application, whether the first frequency supports an LP-WUS is indicated by the information corresponding to the first frequency; in other words, whether an LP-WUS is supported is indicated with a granularity of frequency, which is beneficial to reducing transmission overheads of the first information compared with a solution in which whether an LP-WUS is supported is indicated with a granularity of cell.

In some implementations, the communications protocol specifies that the SIB3 may be used to carry information about an intra-frequency cell. Therefore, to reduce a change to the communications protocol, if the first frequency is intra-frequency, the information corresponding to the first frequency may be carried in the SIB3. For example, a parameter may be added to the SIB3 to carry the information corresponding to the first frequency.

In some other implementations, the communications protocol specifies that the SIB4 may be used to carry information about an inter-frequency cell. Therefore, to reduce a change to the communications protocol, if the first frequency is inter-frequency, the information corresponding to the first frequency may be carried in the SIB4.

For example, referring to the code corresponding to the SIB4 described above, information corresponding to respective inter-frequency frequencies may be carried in an inter-frequency carrier frequency list (represented by "interFreqCarrierFreqList"), so as to indicate whether the respective inter-frequency frequencies support an LP-WUS. Certainly, in embodiments of this application, dedicated information may be directly added to the SIB4 to indicate the information corresponding to the respective inter-frequency frequencies. A manner of carrying the information corresponding to the first frequency in the SIB4 is not specifically limited in embodiments of this application.

The foregoing describes the information corresponding to the first frequency in embodiments of this application, and the following describes a manner of using the information corresponding to the first frequency in embodiments of this application. In embodiments of this application, the information corresponding to the first frequency may affect a cell reselection process or a cell selection process with a granularity of a cell in the first frequency, or may affect a cell reselection process or a cell selection process with a granularity of a frequency. The following describes the two cases.

In some implementations, if the first frequency does not support a low-power wake-up signal, the first frequency does not belong to candidate cells for cell selection/cell reselection; in other words, the terminal device does not consider using a cell in the first frequency as a candidate cell.

That a cell in the first frequency does not belong to candidate cells may be understood as excluding the first frequency in a process of cell reselection or cell selection; in other words, the terminal device does not measure any cell in the first frequency. Certainly, in some embodiments of this application, the terminal device may alternatively measure a cell in the first frequency, but does not use the cell in the first frequency as a candidate cell.

Certainly, in some embodiments of this application, if the first frequency does not support a low-power wake-up signal, a cell in the first frequency may alternatively be a candidate cell. However, a priority of the cell in the first frequency may be lower than that of another cell supporting the low-power wake-up signal in the candidate cells, so as to increase a probability that another cell supporting the low-power wake-up signal is selected by the terminal device.

In some other implementations, if the first frequency supports the low-power wake-up signal, the cell in the first frequency belongs to candidate cells for the cell selection/cell reselection, and a priority of the cell in the first frequency is higher than that of another cell not supporting the low-power wake-up signal in the candidate cells.

That the cell in the first frequency belongs to the candidate cells may be understood as using the cell in the first frequency as a candidate cell in a cell reselection or cell selection process; in other words, the terminal device measures the cell in the first frequency.

The foregoing describes a process in which the information corresponding to the first frequency affects a cell reselection process or a cell selection process with a granularity of a cell in the first frequency, and the following describes a process in which the information corresponding to the first frequency affects a cell reselection process or a cell selection process with a granularity of frequency.

In some scenarios, such as the cell reselection process described above, the network device may indicate, to the terminal device by using the system information, a priority corresponding to a frequency (namely, a "cell reselection priority" described above), so that the terminal device may select a proper frequency based on the cell reselection priority. Therefore, in order to increase a probability that a frequency supporting an LP-WUS is selected by the terminal device, the cell reselection priority may be determined based on the first information.

In some implementations, if the first information is used to indicate that the first frequency supports a low-power wake-up signal, a cell reselection priority corresponding to the first frequency is a highest priority.

In the embodiments of this application, the cell reselection priority corresponding to the first frequency is set to a highest priority, which facilitates increasing a probability that the terminal device camps on the first frequency, to increase use of an LP-WUS signal, thereby reducing power consumption of the terminal device.

In some other implementations, if the first information is used to indicate that the first frequency does not support the low-power wake-up signal, the cell reselection priority corresponding to the first frequency is a lowest priority.

In the embodiments of this application, the cell reselection priority corresponding to the first frequency is set to a lowest priority, which facilitates reducing a time for a terminal to measure or discover a cell that supports an LP-WUS, and increasing a probability that a cell supporting an LP-WUS is reselected by the terminal device, thereby reducing power consumption of the terminal device.

In some implementations, the terminal device may determine a cell reselection priority; in other words, the cell reselection priority corresponding to the first frequency may be determined by the terminal device. For example, after a network device configures the reselection priority corresponding to the first frequency, the terminal device may adjust the cell reselection priority of the first frequency based on the cell reselection priority configured by the network device and according to the first information, where the adjustment includes increasing the priority and/or decreasing the priority.

For example, if the first information indicates that the first frequency supports the LP-WUS, the terminal device may configure the cell reselection priority of the first frequency as the highest priority. For example, if a frequency at which a serving cell is located (namely, the first frequency) supports the LP-WUS, the terminal device may adjust a cell reselection priority corresponding to the frequency at which the serving cell is located to the highest priority.

For another example, if the first information indicates that the first frequency does not support the LP-WUS, the terminal device may configure the cell reselection priority of the first frequency as the lowest priority. For example, if a frequency at which the serving cell is located (namely, the first frequency) does not support the LP-WUS, the terminal device may adjust a cell reselection priority corresponding to the frequency at which the serving cell is located to the lowest priority.

Certainly, in embodiments of this application, the network device may determine the cell reselection priority, that is, the cell reselection priority corresponding to the first frequency may be determined by the network device, and then the network device indicates a determined cell reselection priority to the terminal device. For example, if the first information indicates that the first frequency supports the LP-WUS, the network device may adjust the cell reselection priority corresponding to the first frequency to the highest priority, and then the network device may indicate, to the terminal device, that the cell reselection priority corresponding to the first frequency is the highest priority. For another example, if the first information indicates that the first frequency does not support the LP-WUS, the network device may adjust the cell reselection priority corresponding to the first frequency to the lowest priority, and then the network device may indicate, to the terminal device, that the cell reselection priority corresponding to the first frequency is the lowest priority.

It should be noted that, the foregoing description is provided by using cell-level information and frequency-level first information as examples. In embodiments of this application, the cell-level information and the frequency-level first information may be used alone or in combination. For example, the first information may indicate a specific cell supporting the LP-WUS in the first frequency in a case that the first frequency supports the LP-WUS. For another example, the first information may indicate a specific cell not supporting the LP-WUS in the first frequency in a case that the first frequency does not support the LP-WUS. For another example, when the first information may indicate a specific cell not supporting the LP-WUS in the first frequency in a case that the first frequency supports the LP-WUS. For another example, the first information may indicate a specific cell supporting the LP-WUS in the first frequency in a case that the first frequency does not support the LP-WUS.

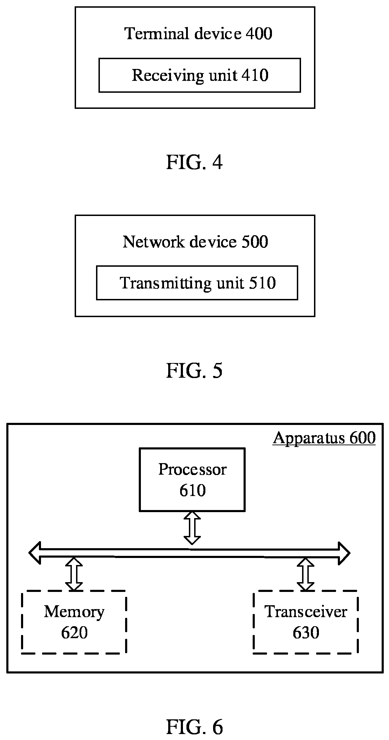

The method embodiments of this application are described above in detail with reference to FIG. 1 to FIG. 3. Apparatus embodiments of this application are described below in detail with reference to FIG. 4 to FIG. 6. It should be understood that the descriptions of the method embodiments correspond to descriptions of the apparatus embodiments, and therefore, for parts that are not described in detail, reference may be made to the foregoing method embodiments.

FIG. 4 is a schematic diagram of a terminal device according to an embodiment of this application. The terminal device 400 shown in FIG. 4 includes a receiving unit 410.

The receiving unit 410 is configured to receive first information, where the first information is used for cell selection/cell reselection, and the first information is related to a low-power wake-up signal.

In a possible implementation, the first information includes one or more of the following: information corresponding to a first cell; or information corresponding to a first frequency.

In a possible implementation, the information corresponding to the first cell is used to indicate whether the first cell supports the low-power wake-up signal.

In a possible implementation, in a case that the first cell does not support the low-power wake-up signal, the first cell meets one of the following: the first cell does not belong to candidate cells for the cell selection/cell reselection; or the first cell belongs to candidate cells for the cell selection/cell reselection, and a priority of the first cell is lower than that of another cell supporting the low-power wake-up signal in the candidate cells.

In a possible implementation, in a case that the first cell does not support the low-power wake-up signal, the terminal device does not perform measurement on the first cell.

In a possible implementation, in a case that the first cell supports the low-power wake-up signal, the first cell belongs to candidate cells for the cell selection/cell reselection, and a priority of the first cell is higher than that of another cell not supporting the low-power wake-up signal in the candidate cells..

In a possible implementation, the information corresponding to the first frequency is used to indicate whether the first frequency supports the low-power wake-up signal.

In a possible implementation, in a case that the first frequency does not support the low-power wake-up signal, the first frequency meets one of the following: a cell in the first frequency does not belong to candidate cells for the cell selection/cell reselection; or a cell in the first frequency belongs to candidate cells for the cell selection/cell reselection, and a priority of the cell in the first frequency is lower than that of a cell in another frequency supporting the low-power wake-up signal in the candidate cells.

In a possible implementation, in a case that the first frequency does not support the low-power wake-up signal, the terminal device does not perform measurement on the first frequency.

In a possible implementation, in a case that the first frequency supports the low-power wake-up signal, a cell in the first frequency belongs to candidate cells for the cell selection/cell reselection, and a priority of the cell in the first frequency is higher than that of a cell in another frequency not supporting the low-power wake-up signal in the candidate cells.

In a possible implementation, the first cell includes one or more of a serving cell, an intra-frequency cell, or an inter-frequency cell; and/or the first frequency includes an intra-frequency frequency and/or an inter-frequency frequency.

In a possible implementation, the cell reselection is performed based on a cell reselection priority, and the cell reselection priority is determined based on the first information.

In a possible implementation, in a case that the first information is used to indicate that the first frequency supports the low-power wake-up signal, a cell reselection priority corresponding to the first frequency is a highest priority; or in a case that the first information is used to indicate that the first frequency does not support the low-power wake-up signal, a cell reselection priority corresponding to the first frequency is a lowest priority.

In a possible implementation, the first information is carried in system information.

In a possible implementation, the first information is carried in a system information block SIB3 or a SIB4 of the system information.

In a possible implementation, the terminal device is a terminal device that supports the low-power wake-up signal.

FIG. 5 is a schematic diagram of a network device according to an embodiment of this application. The network device 500 shown in FIG. 5 includes a transmitting unit 510.

The transmitting unit 510 is configured to transmit first information, where the first information is used for cell selection/cell reselection, and the first information is related to a low-power wake-up signal.

In a possible implementation, the first information includes one or more of the following: information corresponding to a first cell; or information corresponding to a first frequency.

In a possible implementation, the information corresponding to the first cell is used to indicate whether the first cell supports the low-power wake-up signal.

In a possible implementation, in a case that the first cell does not support the low-power wake-up signal, the first cell meets one of the following: the first cell does not belong to candidate cells for the cell selection/cell reselection; or the first cell belongs to candidate cells for the cell selection/cell reselection, and a priority of the first cell is lower than that of another cell supporting the low-power wake-up signal in the candidate cells.

In a possible implementation, in a case that the first cell does not support the low-power wake-up signal, the terminal device does not perform measurement on the first cell.

In a possible implementation, in a case that the first cell supports the low-power wake-up signal, the first cell belongs to candidate cells for the cell selection/cell reselection, and a priority of the first cell is higher than that of another cell not supporting the low-power wake-up signal in the candidate cells.

In a possible implementation, the information corresponding to the first frequency is used to indicate whether the first frequency supports the low-power wake-up signal.

In a possible implementation, in a case that the first frequency does not support the low-power wake-up signal, the first frequency meets one of the following: a cell in the first frequency does not belong to candidate cells for the cell selection/cell reselection; or a cell in the first frequency belongs to candidate cells for the cell selection/cell reselection, and a priority of a cell in the first frequency is lower than that of a cell in another frequency supporting the low-power wake-up signal in the candidate cells.

In a possible implementation, in a case that the first frequency does not support the low-power wake-up signal, the terminal device does not perform measurement on the first frequency.

In a possible implementation, in a case that the first frequency supports the low-power wake-up signal, a cell in the first frequency belongs to candidate cells for the cell selection/cell reselection, and a priority of the cell in the first frequency is higher than that of a cell in another frequency not supporting the low-power wake-up signal in the candidate cells.

In a possible implementation, the first cell includes one or more of a serving cell, an intra-frequency cell, or an inter-frequency cell; and/or the first frequency includes an intra-frequency frequency and/or an inter-frequency frequency.

In a possible implementation, the cell reselection is performed based on a cell reselection priority, and the cell reselection priority is determined based on the first information.

In a possible implementation, in a case that the first information is used to indicate that the first frequency supports the low-power wake-up signal, a cell reselection priority corresponding to the first frequency is a highest priority; or in a case that the first information is used to indicate that the first frequency does not support the low-power wake-up signal, a cell reselection priority corresponding to the first frequency is a lowest priority.

In a possible implementation, the first information is carried in system information.

In a possible implementation, the first information is carried in a system information block SIB3 or a SIB4 of the system information.

In a possible implementation, the terminal device is a terminal device that supports the low-power wake-up signal.

In an optional embodiment, the receiving unit 410 may be a transceiver 630. The terminal device 400 may further include a processor 610 and a memory 620, as shown in FIG. 6.

In an optional embodiment, the transmitting unit 510 may be the transceiver 630. The network device 500 may further include the processor 610 and the memory 620, as shown in FIG. 6.

FIG. 6 is a schematic structural diagram of a communications apparatus according to an embodiment of this application. Dashed lines in FIG. 6 indicate that a unit or module is optional. The apparatus 600 may be configured to implement the methods described in the foregoing method embodiments. The apparatus 600 may be a chip, a terminal device, or a network device.

The apparatus 600 may include one or more processors 610. The processor 610 may support the apparatus 600 in implementing the methods described in the foregoing method embodiments. The processor 610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 600 may further include one or more memories 620. The memory 620 stores a program that may be executed by the processor 610 to cause the processor 610 to perform the methods described in the foregoing method embodiments. The memory 620 may be separated from or integrated into the processor 610.

The apparatus 600 may further include a transceiver 630. The processor 610 may communicate with another device or chip through the transceiver 630. For example, the processor 610 may transmit data to and receive data from another device or chip through the transceiver 630.

An embodiment of this application further provides a computer-readable storage medium for storing a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, first information, wherein the first information is used for cell selection/cell reselection, and the first information is related to a low-power wake-up signal.

2. The method according to claim 1, wherein the first information comprises one or more of following: information corresponding to a first cell; or information corresponding to a first frequency.

3. The method according to claim 2, wherein the information corresponding to the first cell is used to indicate whether the first cell supports the low-power wake-up signal.

4. The method according to claim 3, wherein in a case that the first cell does not support the low-power wake-up signal, the first cell meets one of following:
the first cell does not belong to candidate cells for the cell selection/cell reselection; or
the first cell belongs to candidate cells for the cell selection/cell reselection, and a priority of the first cell is lower than that of another cell supporting the low-power wake-up signal in the candidate cells.

5. The method according to claim 3, wherein in a case that the first cell does not support the low-power wake-up signal, the terminal device does not perform measurement on the first cell.

6. The method according to any one of claims 3 to 5, wherein in a case that the first cell supports the low-power wake-up signal, the first cell belongs to candidate cells for the cell selection/cell reselection, and a priority of the first cell is higher than that of another cell not supporting the low-power wake-up signal in the candidate cells.

7. The method according to any one of claims 2 to 6, wherein the information corresponding to the first frequency is used to indicate whether the first frequency supports the low-power wake-up signal.

8. The method according to claim 7, wherein in a case that the first frequency does not support the low-power wake-up signal, the first frequency meets one of following:
a cell in the first frequency does not belong to candidate cells for the cell selection/cell reselection; or
a cell in the first frequency belongs to candidate cells for the cell selection/cell reselection, and a priority of a cell in the first frequency is lower than that of a cell in another frequency supporting the low-power wake-up signal in the candidate cells.

9. The method according to claim 7, wherein in a case that the first frequency does not support the low-power wake-up signal, the terminal device does not perform measurement on the first frequency.

10. The method according to any one of claims 7 to 9, wherein in a case that the first frequency supports the low-power wake-up signal, a cell in the first frequency belongs to candidate cells for the cell selection/cell reselection, and a priority of the cell in the first frequency is higher than that of a cell in another frequency not supporting the low-power wake-up signal in the candidate cells.

11. The method according to any one of claims 2 to 10, wherein the first cell comprises one or more of a serving cell, an intra-frequency cell, or an inter-frequency cell; and/or
the first frequency comprises an intra-frequency frequency and/or an inter-frequency frequency.

12. The method according to any one of claims 1 to 11, wherein the cell reselection is performed based on a cell reselection priority, and the cell reselection priority is determined based on the first information.

13. The method according to claim 12, wherein in a case that the first information is used to indicate that the first frequency supports the low-power wake-up signal, a cell reselection priority corresponding to the first frequency is a highest priority; or
in a case that the first information is used to indicate that the first frequency does not support the low-power wake-up signal, a cell reselection priority corresponding to the first frequency is a lowest priority.

14. The method according to any one of claims 1 to 13, wherein the first information is carried in system information.

15. The method according to claim 14, wherein the first information is carried in a system information block SIB3 or a SIB4 of the system information.

16. The method according to any one of claims 1 to 15, wherein the terminal device is a terminal device that supports the low-power wake-up signal.

17. A wireless communication method, comprising:
transmitting, by a network device, first information, wherein the first information is used for cell selection/cell reselection, and the first information is related to a low-power wake-up signal.

18. The method according to claim 17, wherein the first information comprises one or more of following: information corresponding to a first cell; or information corresponding to a first frequency.

19. The method according to claim 18, wherein the information corresponding to the first cell is used to indicate whether the first cell supports the low-power wake-up signal.

20. The method according to claim 19, wherein in a case that the first cell does not support the low-power wake-up signal, the first cell meets one of following:
the first cell does not belong to candidate cells for the cell selection/cell reselection; or
the first cell belongs to candidate cells for the cell selection/cell reselection, and a priority of the first cell is lower than that of another cell supporting the low-power wake-up signal in the candidate cells.

21. The method according to claim 19, wherein in a case that the first cell does not support the low-power wake-up signal, the terminal device does not perform measurement on the first cell.

22. The method according to any one of claims 19 to 21, wherein in a case that the first cell supports the low-power wake-up signal, the first cell belongs to candidate cells for the cell selection/cell reselection, and a priority of the first cell is higher than that of another cell not supporting the low-power wake-up signal in the candidate cells.

23. The method according to any one of claims 18 to 22, wherein the information corresponding to the first frequency is used to indicate whether the first frequency supports the low-power wake-up signal.

24. The method according to claim 23, wherein in a case that the first frequency does not support the low-power wake-up signal, the first frequency meets one of following:
a cell in the first frequency does not belong to candidate cells for the cell selection/cell reselection; or
a cell in the first frequency belongs to candidate cells for the cell selection/cell reselection, and a priority of a cell in the first frequency is lower than that of a cell in another frequency supporting the low-power wake-up signal in the candidate cells.

25. The method according to claim 23, wherein in a case that the first frequency does not support the low-power wake-up signal, the terminal device does not perform measurement on the first frequency.

26. The method according to any one of claims 23 to 25, wherein in a case that the first frequency supports the low-power wake-up signal, a cell in the first frequency belongs to candidate cells for the cell selection/cell reselection, and a priority of the cell in the first frequency is higher than that of a cell in another frequency not supporting the low-power wake-up signal in the candidate cells.

27. The method according to any one of claims 18 to 26, wherein the first cell comprises one or more of a serving cell, an intra-frequency cell, or an inter-frequency cell; and/or
the first frequency comprises an intra-frequency frequency and/or an inter-frequency frequency.

28. The method according to any one of claims 17 to 27, wherein the cell reselection is performed based on a cell reselection priority, and the cell reselection priority is determined based on the first information.

29. The method according to claim 28, wherein in a case that the first information is used to indicate that the first frequency supports the low-power wake-up signal, a cell reselection priority corresponding to the first frequency is a highest priority; or
in a case that the first information is used to indicate that the first frequency does not support the low-power wake-up signal, a cell reselection priority corresponding to the first frequency is a lowest priority.

30. The method according to any one of claims 17 to 29, wherein the first information is carried in system information.

31. The method according to claim 30, wherein the first information is carried in a system information block SIB3 or a SIB4 of the system information.

32. The method according to any one of claims 17 to 31, wherein the terminal device is a terminal device that supports the low-power wake-up signal.

33. A terminal device, comprising:
a receiving unit, configured to receive first information, wherein the first information is used for cell selection/cell reselection, and the first information is related to a low-power wake-up signal.

34. The terminal device according to claim 33, wherein the first information comprises one or more of following: information corresponding to a first cell; or information corresponding to a first frequency.

35. The terminal device according to claim 34, wherein the information corresponding to the first cell is used to indicate whether the first cell supports the low-power wake-up signal.

36. The terminal device according to claim 35, wherein in a case that the first cell does not support the low-power wake-up signal, the first cell meets one of following:
the first cell does not belong to candidate cells for the cell selection/cell reselection; or
the first cell belongs to candidate cells for the cell selection/cell reselection, and a priority of the first cell is lower than that of another cell supporting the low-power wake-up signal in the candidate cells.

37. The terminal device according to claim 35, wherein in a case that the first cell does not support the low-power wake-up signal, the terminal device does not perform measurement on the first cell.

38. The terminal device according to any one of claims 35 to 37, wherein in a case that the first cell supports the low-power wake-up signal, the first cell belongs to candidate cells for the cell selection/cell reselection, and a priority of the first cell is higher than that of another cell not supporting the low-power wake-up signal in the candidate cells.

39. The terminal device according to any one of claims 34 to 38, wherein the information corresponding to the first frequency is used to indicate whether the first frequency supports the low-power wake-up signal.

40. The terminal device according to claim 39, wherein in a case that the first frequency does not support the low-power wake-up signal, the first frequency meets one of following:
a cell in the first frequency does not belong to candidate cells for the cell selection/cell reselection; or
a cell in the first frequency belongs to candidate cells for the cell selection/cell reselection, and a priority of a cell in the first frequency is lower than that of a cell in another frequency supporting the low-power wake-up signal in the candidate cells.

41. The terminal device according to claim 39, wherein in a case that the first frequency does not support the low-power wake-up signal, the terminal device does not perform measurement on the first frequency.

42. The terminal device according to any one of claims 39 to 41, wherein in a case that the first frequency supports the low-power wake-up signal, a cell in the first frequency belongs to candidate cells for the cell selection/cell reselection, and a priority of the cell in the first frequency is higher than that of a cell in another frequency not supporting the low-power wake-up signal in the candidate cells.

43. The terminal device according to any one of claims 34 to 42, wherein the first cell comprises one or more of a serving cell, an intra-frequency cell, or an inter-frequency cell; and/or
the first frequency comprises an intra-frequency frequency and/or an inter-frequency frequency.

44. The terminal device according to any one of claims 33 to 43, wherein the cell reselection is performed based on a cell reselection priority, and the cell reselection priority is determined based on the first information.

45. The terminal device according to claim 44, wherein in a case that the first information is used to indicate that the first frequency supports the low-power wake-up signal, a cell reselection priority corresponding to the first frequency is a highest priority; or
in a case that the first information is used to indicate that the first frequency does not support the low-power wake-up signal, a cell reselection priority corresponding to the first frequency is a lowest priority.

46. The terminal device according to any one of claims 33 to 45, wherein the first information is carried in system information.

47. The terminal device according to claim 46, wherein the first information is carried in a system information block SIB3 or a SIB4 of the system information.

48. The terminal device according to any one of claims 33 to 47, wherein the terminal device is a terminal device that supports the low-power wake-up signal.

49. A network device, comprising:
a transmitting unit, configured to transmit first information, wherein the first information is used for cell selection/cell reselection, and the first information is related to a low-power wake-up signal.

50. The network device according to claim 49, wherein the first information comprises one or more of following: information corresponding to a first cell; or information corresponding to a first frequency.

51. The network device according to claim 50, wherein the information corresponding to the first cell is used to indicate whether the first cell supports the low-power wake-up signal.

52. The network device according to claim 51, wherein in a case that the first cell does not support the low-power wake-up signal, the first cell meets one of following:
the first cell does not belong to candidate cells for the cell selection/cell reselection; or
the first cell belongs to candidate cells for the cell selection/cell reselection, and a priority of the first cell is lower than that of another cell supporting the low-power wake-up signal in the candidate cells.

53. The network device according to claim 51, wherein in a case that the first cell does not support the low-power wake-up signal, the terminal device does not perform measurement on the first cell.

54. The network device according to any one of claims 51 to 53, wherein in a case that the first cell supports the low-power wake-up signal, the first cell belongs to candidate cells for the cell selection/cell reselection, and a priority of the first cell is higher than that of another cell not supporting the low-power wake-up signal in the candidate cells.

55. The network device according to any one of claims 50 to 54, wherein the information corresponding to the first frequency is used to indicate whether the first frequency supports the low-power wake-up signal.

56. The network device according to claim 55, wherein in a case that the first frequency does not support the low-power wake-up signal, the first frequency meets one of following:
a cell in the first frequency does not belong to candidate cells for the cell selection/cell reselection; or
a cell in the first frequency belongs to candidate cells for the cell selection/cell reselection, and a priority of a cell in the first frequency is lower than that of a cell in another frequency supporting the low-power wake-up signal in the candidate cells.

57. The network device according to claim 55, wherein in a case that the first frequency does not support the low-power wake-up signal, the terminal device does not perform measurement on the first frequency.

58. The network device according to any one of claims 55 to 57, wherein in a case that the first frequency supports the low-power wake-up signal, a cell in the first frequency belongs to candidate cells for the cell selection/cell reselection, and a priority of the cell in the first frequency is higher than that of a cell in another frequency not supporting the low-power wake-up signal in the candidate cells.

59. The network device according to any one of claims 50 to 58, wherein the first cell comprises one or more of a serving cell, an intra-frequency cell, or an inter-frequency cell; and/or
the first frequency comprises an intra-frequency frequency and/or an inter-frequency frequency.

60. The network device according to any one of claims 49 to 59, wherein the cell reselection is performed based on a cell reselection priority, and the cell reselection priority is determined based on the first information.

61. The network device according to claim 60, wherein in a case that the first information is used to indicate that the first frequency supports the low-power wake-up signal, a cell reselection priority corresponding to the first frequency is a highest priority; or
in a case that the first information is used to indicate that the first frequency does not support the low-power wake-up signal, a cell reselection priority corresponding to the first frequency is a lowest priority.

62. The network device according to any one of claims 49 to 61, wherein the first information is carried in system information.

63. The network device according to claim 62, wherein the first information is carried in a system information block SIB3 or a SIB4 of the system information.

64. The network device according to any one of claims 49 to 63, wherein the terminal device is a terminal device that supports the low-power wake-up signal.

65. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 16.

66. A network device, comprising a transceiver, a memory, and a processor, wherein the memory is configured to store a program, and the processor is configured to invoke the program in the memory and control the transceiver to transmit or receive a signal, to cause the network device to execute the method according to any one of claims 17 to 32.

67. An apparatus, comprising a processor configured to invoke a program from a memory, to cause the apparatus to execute the method according to any one of claims 1 to 32.

68. A chip, comprising a processor, configured to invoke a program from a memory to cause a device installed with the chip to execute the method according to any one of claims 1 to 32.

69. A computer-readable storage medium, wherein the computer-readable storage medium stores a program, and the program causes a computer to execute the method according to any one of claims 1 to 32.

70. A computer program product, comprising a program that causes a computer to execute the method according to any one of claims 1 to 32.

71. A computer program, wherein the computer program causes a computer to execute the method according to any one of claims 1 to 32.
